**Europäisches Patentamt**

**European Patent Office**

**Office européen des brevets**

(19)

(11) Publication number: **0 102 101**
**B1**

(12) **EUROPEAN PATENT SPECIFICATION**

(45) Date of publication of patent specification: **22.10.86**

(51) Int. Cl.⁴: **G 01 J 5/34**

(21) Application number: **83201064.9**

(22) Date of filing: **19.07.83**

(54) **Pyroelectric infra-red radiation detector.**

(30) Priority: **23.07.82 GB 8220816**

(43) Date of publication of application:
**07.03.84 Bulletin 84/10**

(45) Publication of the grant of the patent:
**22.10.86 Bulletin 86/43**

(84) Designated Contracting States:
**CH DE FR GB IT LI SE**

(56) References cited:
**GB-A-2 061 616**
**US-A-4 044 251**

(73) Proprietor: **PHILIPS ELECTRONIC AND ASSOCIATED INDUSTRIES LIMITED**
**Arundel Great Court 8 Arundel Street**
**London WC2R 3DT (GB)**
(84) **GB**

(73) Proprietor: **N.V. Philips' Gloeilampenfabrieken**
**Groenewoudseweg 1**
**NL-5621 BA Eindhoven (NL)**
(84) **CH DE FR IT LI SE**

(72) Inventor: **Baker, Geoffrey c/o Mullard Southampton**
**Millbrook Industrial Estate**
**Southampton Hants S09 7BH (GB)**
Inventor: **Ball, Patrick John Richard c/o Mullard Southampton**
**Millbrook Industrial Estate**
**Southampton Hants S09 7BH (GB)**
Inventor: **Renals, Martin c/o Mullard Southampton**
**Millbrook Industrial Estate**
**Southampton Hants S09 7BH (GB)**

(74) Representative: **Frain, Timothy John et al**
**Philips Electronic and Associated Industries Ltd.**
**Patent Department Mullard House Torrington Place**
**London WC1E 7HD (GB)**

Courier Press, Leamington Spa, England.

## Description

This invention relates to an infra-red radiation detector comprising an envelope with a base, a pyroelectric element having a body of pyroelectric material sandwiched between two electrodes, which pyroelectric element is present inside the envelope and maintained in spaced relation to the base by two support members, and a circuit arrangement having at least one circuit element connected electrically to one of said electrodes, the circuit arrangement being encapsulated within a package which is fastened to the base inside the envelope and which has protruding conductive leads connected to the circuit arrangement, one of the support members comprising one of said conductive leads.

An infra-red radiation detector employing a pyroelectric element can be used, for example, in an intruder alarm. It is because the intruder is a moving source of infra-red radiation that his presence can be detected. The infra-red radiation emitted by the intruder is converted by the detector into an electric signal which can be used to actuate an alarm.

It is usual to mount the pyroelectric element in an envelope and, in order that the detector is well isolated from detrimental environmental effects and for optimum performance at low frequencies, the pyroelectric element is fixed in spaced relation to a base part of the envelope. This minimizes heat transfer from other parts of the detector to the pyroelectric element and lengthens the thermal time constant.

A basic infra-red radiation detector may comprise a single pyroelectric element sandwiched between two electrodes. As the pyroelectric element has a relatively high impedance it is customary to include a circuit element in the form of a field effect transistor (hereinafter termed F E T) which acts as an amplifier stage or impedance matching means, the gate of the FET being connected to one of the two electrodes.

In more sophisticated detectors the circuitry which is located in the proximity of and in the same envelope as the pyroelectric element may be more complex. For example, United Kingdom Patent Specification GB 1,580,403 describes a detector which also includes a non-linear network which protects the gate of the FET from excessive voltages resulting from large or sudden changes in input radiation.

As described in the patent specification the pyroelectric element is maintained in spaced relation to the base of the envelope by a U-shaped plinth member and the circuit elements which are located in the proximity of the pyroelectric element(s) are unencapsulated chips. The various electrical connections to these chips are made by bonded wires. Unfortunately, the technique of bonding wires to the relatively small contact areas of unencapsulated chips is both expensive and difficult to perform accurately so that the yield of usefully bonded detectors can be undesirably restricted.

Also, there is another problem which results from the use of unencapsulated chips, namely the difficulty of performing certain desirable tests on the chip, for example, measurement of low leakage current and low voltage noise of the circuit elements. These tests can, of course, be carried out after the chips have been included in the detector, but there is then the drawback that an unsuitable chip cannot be identified until the detector is virtually complete. It can be expensive to test the chips at this late stage because an unsuitable chip then results in the rejection not only of the chip itself, but also of the whole detector comprising that chip.

These problems are mitigated by the invention described and claimed in co-pending U.K. patent application 8122186 filed by the present Applicants on 17th July 1981 and corresponding to EP—A—0070601 (Art. 54(3) EPC; priority 17.07.81; published 26.01.83). In that case one of the electrodes of the pyroelectric element is connected to a circuit arrangement which is encapsulated within a so-called microminiature package. This package is mounted on the base inside the envelope and has protruding conductive leads connected to the circuit arrangement. The pyroelectric element is maintained in spaced relation to the base by two support members, one of which is formed by one of the conductive leads of the package and the other by a separate pillar.

According to the present invention an infra-red radiation detector comprises an envelope with a base, a pyroelectric element having a body of pyroelectric material sandwiched between two electrodes, which pyroelectric element is present inside the envelope and maintained in spaced relation to the base by two support members, and a circuit arrangement having at least one circuit element connected electrically to one of said electrodes, the circuit arrangement being encapsulated within a package which is mounted on the base inside the envelope and which has protruding conductive leads connected to the circuit arrangement, one of the support members comprising one of said conductive leads and the other support member comprising a further conductive lead of said package.

By using the leads of the encapsulating package not only to support the pyroelectric element but also to make the electrical connection between the circuit element and the pyroelectric element, the total number of bonded wires in a complete detector can be significantly reduced compared with the detector disclosed in GB 1,580,403.

Moreover, for any electrical connections which are still made to the circuit arrangement by wire bonds the tolerances are much less severe because of the larger contact areas presented by the protruding leads of the package. This has the advantage that detectors can be made more simply at lower cost and with increased yields.

The use of a circuit arrangement encapsulated within a package is particularly beneficial not only because assembly of the detector is simplified, but also because the constituent circuit elements can then be subjected to the tests mentioned above before the circuit arrangement is fixed in the detector. By identifying and rejecting unsuitable packages at this early stage the yield of useful detectors can be further increased. Moreover, the encapsulation provides the benefit of shielding the circuit elements from visible radiation which may have leaked into the envelope and which might otherwise cause a false alarm by generating an undesired photosignal.

The encapsulating package may be a so-called microminiature package which is essentially a small block of plastics material encapsulating one or more circuit elements. Conductive leads which extend from the side faces of the package are connected electrically to the circuit elements as appropriate. The package has two major faces and the conductive leads, for their major part, extend transversely thereto. In addition the leads extend proud of one of the major faces for connection purposes. It is conventional to mount a microminiature package such that these leads extend towards a supporting surface such as a printed circuit board. In this case the leads of the microminiature package are connected to appropriate conductors on the circuit board. However, as will become clearer from the following description, if a microminiature package is used in a detector in accordance with the invention it is mounted so that its conductive leads extend away from the supporting surface, i.e. the base of the envelope. As compared with the conventional mode of mounting, the microminiature package is now effectively upside down.

In contrast with the detector described and claimed in our co-pending British patent application 8122186 the pyroelectric element of the present detector is supported by two conductive leads of the encapsulating package rather than by one such lead and a separate pillar. The Applicants were surprised to find that this arrangement gave a substantial decrease in microphonic signals (i.e. undesirable signals generated by mechanical shock or vibration) which the Applicants now believe is due to the reduced contact area between the supporting members and the base of the envelope. This is a most important advantage, for example in intruder alarms, because the detector is less likely to trigger a false alarm.

In order that the two circuit leads supporting the pyroelectric element may be connected to different circuit elements it is preferable that the pyroelectric element is electrically connected to a first supporting lead and electrically insulated from a second supporting lead.

The detector may comprise one or two pyroelectric elements connected in series. A detector with two such elements, usually referred to as a 'Dual' detector may be formed either from two separate pyroelectric bodies each sandwiched between two electrodes or from a common pyroelectric body having two electrodes on one side and a common electrode on the opposite side in overlapping relation with the other two electrodes.

If both pyroelectric elements are to be insulated from supporting leads on the same side of the encapsulating package it is advantageous to use a common insulating filament seated between the supporting leads and a side face of the package. To achieve the appropriate insulation the pyroelectric elements are fastened to a part of the filament extending proud of the supporting leads.

Embodiments of the invention will now be described, by way of example, with reference to the accompanying drawings, in which:

Figure 1 is an isometric view of an infra-red radiation detector in accordance with the invention;

Figure 2 shows a circuit arrangement for the detector of Figure 1,

Figure 3 is an elevation of part of the Figure 1 detector in the direction of arrow A,

Figure 4 is an isometric view of an insulating filament and

Figure 5 is a side elevation of part of a detector including the filament of Figure 4.

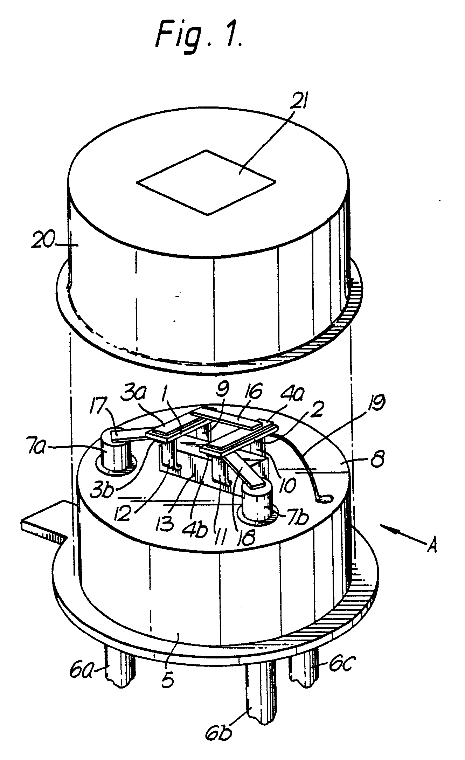

The infra-red radiation detector shown in Figure 1 is a Dual detector comprising two pyroelectric elements 1, 2 formed from two separate bodies of pyroelectric material such as lanthanum and manganese doped lead zirconate titanate. For more information about this material reference is invited to United Kingdom Patent Specification GB 1,504,283. The pyroelectric body of each element 1, 2 is sandwiched between two nichrome electrodes 3a, 3b and 4a, 4b. The uppermost electrodes 3a, 4a are substantially transparent to the infra-red radiation of a wavelength at which the detector is responsive. The electrodes 3a, 3b, 4a, 4b cover the majority of the major surfaces of the elements 1, 2. These elements 1, 2, which may be 2 mm.×1 mm.×150 micrometres, are spaced apart from the base of an envelope in the form of a three lead header 5 which may have a conventional TO-5 outline. Two of the leads 6a, 6b extend through the header 5 to form two posts 7a, 7b respectively which protrude above a substantially flat surface 8 of the header 5, while the third lead 6c is conductively connected to the surface 8.

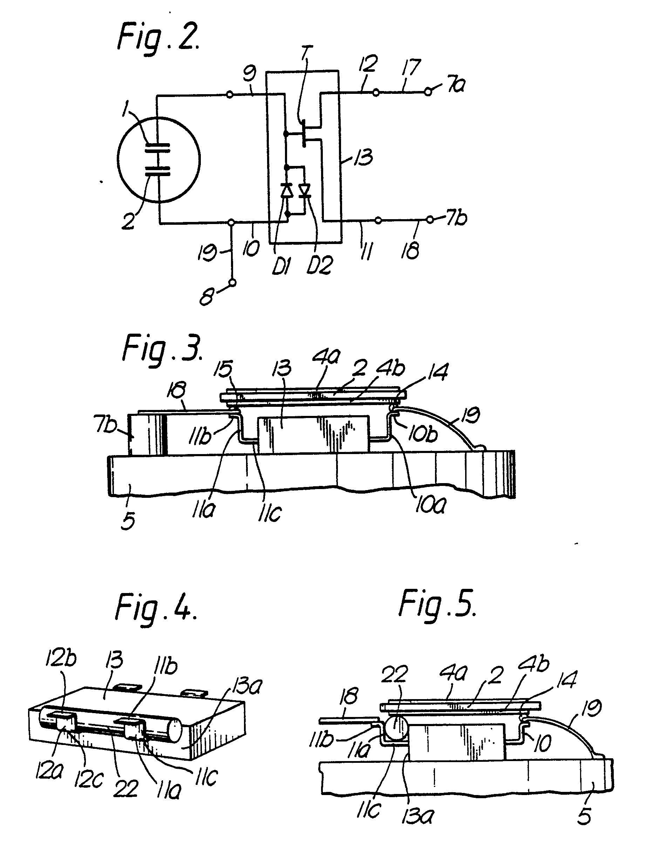

The pyroelectric elements 1, 2 are each maintained in spaced relation to the surface 8 by two conductive leads 9, 10 and 11, 12 respectively which protrude from a side face of a so-called microminiature package 13 which is essentially a small rectangular block of plastics material encapsulating a circuit arrangement as explained above. In this case the circuit arrangement comprises a field effect transistor T and two diodes D1, D2 in parallel-opposition connected to the gate of transistor T as shown in Figure 2. The package 13 is a four lead device having two tab-like leads extending symmetrically from each of two opposite side faces of the package, its dimensions being approximately 2.85 mm.×1.25 mm.×0.8 mm. Using an epoxy adhesive the package 13 is fixed centrally to the surface 8 by one of its major flat faces such that the protruding leads 9, 10, 11, 12 extend away from surface 8.

Each lead 9, 10, 11, 12 has a main portion in the form of a leg (10a, 11a in Figure 3) which is in upstanding relation to the surface 8 of base 5 and which extends above the upper face of the microminiature package 13. Also the leads 9, 10, 11, 12 each have an end portion remote from the package 13 in the form of feet (10b, 11b in Figure 3) which are transverse to the legs and which extend substantially parallel to surface 8. The electrodes 3b, 4b of the pyroelectric elements 1, 2 respectively bear on the feet of the leads and are secured thereto using a conductive adhesive 14 for leads 9 and 10 and a non-conductive adhesive 15 for leads 11 and 12 (see Figure 3). The conductive adhesive may be Ablebond 36/2 (Trade Mark) available from Ablestik Laboratories, U.S.A., and the non-conductive adhesive may be a conventional epoxy adhesive.

The electrode 4b of pyroelectric element 2 is conductively connected to surface 8 and so to the lead 6c of header 5 by means of a wire 19 bonded to lead 10 and the surface 8. An electrical connection is made between the electrodes 3a and 4a using a conductive foil strap 16 which may be made of gold. This strap 16 is bonded to the electrodes 3a, 4a using a conductive adhesive.

The two leads 11, 12 of the microminiature package 13 which are insulated from the pyroelectric elements by the insulating adhesive are conductively connected to the leads 6a, 6b of the header 5 via the posts 7a, 7b respectively. This connection may be made by straps 17, 18 of a metal foil such as gold. The strap 17 bears on post 7a and the foot 12b of lead 12, while strap 18 similarly bears on post 7b and foot 11b of lead 11. These straps 17, 18 can be secured using an electrically conductive adhesive.

At this point it is noted that instead of using metal foil for the straps 16, 17, 18 metal bars or wires may be used instead.

The electric circuit set up by the circuit elements in package 13 and the various connections is shown in Figure 2. As is conventional, the pyroelectric elements 1, 2 are represented as capacitors. For more detailed information about this circuit arrangement reference is invited to United Kingdom Patent Specification GB 1,580,403. Briefly, it can be said that the diode arrangement protects the gate of the Field Effect Transistor T (which forms part of an impedance matching circuit) from excessive voltages and progressively limits the pyroelectric voltage resulting from large changes in ambient temperature.

The detector is completed by securing a conventional envelope cover member 20 to the rim of the header 5 in known manner, the cover member 20 having a window 21 above the pyroelectric elements 1, 2 which is transparent to infra-red radiation.

To ensure good electrical insulation between the pyroelectric elements and the conductive leads 11 and 12 it may be preferable to include a separate intermediate insulating member apart from the insulating adhesive 15. For example a common filament 22 of insulating material such as nylon may be fastened using a conventional epoxy adhesive between the upstanding portions 11a, 12a of the leads 11, 12 respectively and the side face 13a of the microminiature package 13. The diameter of the filament 22 is such that it extends proud of the end portions 11b, 12b of the leads 11 and the pyroelectric elements 1, 2 are fastened using a conventional epoxy adhesive to the parts of the filament above the conductive leads (see Figure 5). The transverse portions 11c, 12c of the conductive leads extending into the sides of the package 13 act as stops for the filament 22.

The detector described so far is a Dual detector comprising two pyroelectric elements formed from two separate bodies of pyroelectric material. As an alternative, the two pyroelectric elements may be formed from a common pyroelectric body having two individual electrodes on a first major surface and a single common electrode on a second opposite major surface. This single body can replace the separate pyroelectric elements 1, 2 shown in Figure 1. In this case the two individual electrodes face the surface 8 of header 5 and the common electrode is directed away from that surface. The two individual electrodes are fastened directly or indirectly to the leads 9, 10, 11, 12 of the microminiature package 13 as previously described.

The invention is also applicable to infra-red radiation detectors comprising a single pyroelectric element similarly sandwiched between two electrodes. If such an element is used with the microminiature package described above then lead 9 of the package 13 supports and is electrically connected to the element at one end and lead 12 supports but is electrically insulated from it at the opposite end. The upper electrode of the element is conductively connected to lead 10 of the package 13, for example, using a strap of conductive foil. The leads 11 and 12 of package 13 are connected to the posts of the header as described above.

Of course the package may contain a circuit arrangement different to that described above. For example it may contain a single circuit element such as a field effect transistor. In this case the package only has three conductive leads extending therefrom. These leads are connected respectively to the gate, source and drain of the transistor. The lead connected to the gate can be used to support one end of a single pyroelectric element, the lower electrode of this element being conductively bonded to that lead. The other end of the single element can be supported by, but electrically insulated from, the lead connected either to the source or the drain of the transistor. The source and drain leads are electrically connected to the posts of the header as before and the upper electrode of the element is connected electrically to the base of the header, for example, with a wire bond.

## Claims

1. An infra-red radiation detector comprising an envelope with a base, a pyroelectric element having a body of pyroelectric material sandwiched between two electrodes, which pyroelectric element is present inside the envelope and maintained in spaced relation to the base by two support members, and a circuit arrangement having at least one circuit element connected electrically to one of said electrodes, the circuit arrangement being encapsulated within a package which is mounted on the base inside the envelope and which has protruding conductive leads connected to the circuit arrangement, one of the support members comprising one of said conductive leads and the other support member comprising a further conductive lead of said package.

2. An infra-red radiation detector as claimed in Claim 1, characterized in that the package has a substantially flat face which is fastened to the base of the envelope such that the protruding conductive leads extend away from said base.

3. An infra-red radiation detector as claimed in either of the preceding Claims, characterised in that the supporting leads each have a main portion which is in upstanding relation to the base of the envelope, and an end portion remote from said package, which end portion is transverse to said main portion.

4. An infra-red radiation detector as claimed in any of the preceding Claims, characterized in that the pyroelectric element is electrically connected to a first supporting lead and electrically insulated from a second supporting lead.

5. An infra-red radiation detector as claimed in any of the preceding Claims, characterized in that the detector comprises two pyroelectric elements having a body or body part of pyroelectric material sandwiched between two electrodes, each of which pyroelectric elements is maintained in spaced relation to the base of the envelope by two conductive leads of the package in such manner that each of said pyroelectric elements is electrically connected to a respective first supporting lead and electrically insulated from a respective second supporting lead.

6. An infra-red radiation detector as claimed in Claim 5, when appendant to Claim 3, characterized in that the pyroelectric elements are insulated from the respective second supporting leads by a common insulating filament seated between the upstanding main portions of the second supporting leads and a side face of the package, the pyroelectric elements being fastened to a part of the filament extending proud of the end portions of said second supporting leads.

7. An infra-red radiation detector as claimed in Claim 5 or Claim 6, characterized in that the circuit arrangement comprises a field effect transistor, the gate of which transistor is electrically connected to one of the first supporting leads, and further comprises a pair of diodes connected in opposite sense between the gate and the other first supporting lead.

8. An infra-red radiation detector as claimed in Claim 7, characterized in that the envelope has conductive leads which extend through the base to form at least two contact posts inside the envelope, and in that the source and drain of the field effect transistor are electrically connected respectively to the second supporting leads of the package, each of which second supporting leads is connected electrically to a respective one of said posts.

## Patentansprüche

1. Infrarot-Strahlungsdetektor mit einem Kolben mit einer Basis, einem pyroelektrischen Element mit einem zwischen zwei Elektroden in Sandwich-Form angebrachten Körper aus pyroelektrischem Material, dem bei das pyroelektrische Element im Kolben und im Abstand von der Basis durch zwei Trägerelemente gehalten wird, und mit einer Schaltungsanordnung mit zumindest einem Schaltungselement, das elektrisch mit einer der Elektroden verbunden ist, wobei die Schaltungsanordnung in einer Verpackung eingekapselt ist, die auf der Basis im Kolben angebracht ist, und an die Schaltungsanordnung angeschlossene herausragende Leiter enthält, wobei eines der Trägerelemente einen der Leiter und das andere Trägerelement einen weiteren Leiter dieser Verpackung enthält.

2. Infrarot-Strahlungsdetektor nach Anspruch 1, dadurch gekennzeichnet, dass die Verpackung eine im wesentlichen ebene Fläche aufweisst, die an der Kolbenbasis derart befestigt ist, dass die herausragenden Leiter sich von dieser Basis aus erstrecken.

3. Infrarot-Strahlungsdetektor nach einem der vorangehenden Ansprüche, dadurch gekennzeichnet, dass die tragenden Leiter einen hochstehenden Hauptabschnitt in bezug auf die Basis des Kolbens und einem im Abstand von der Verpackung liegenden Endabschnitt enthält, wobei dieser Endabschnitt quer zum genannten Hauptabschnitt verläuft.

4. Infrarot-Strahlungsdetektor nach einem der vorangehenden Ansprüche, dadurch gekennzeichnet, dass das pyroelektrische Element elektrisch an einen ersten tragenden Leiter angeschlossen und von einem zweiten tragenden Leiter elektrisch isoliert ist.

5. Infrarot-Strahlungsdetektor nach einem der vorangehenden Ansprüche, dadurch gekennzeichnet, dass der Detektor zwei pyroelektrische Elemente mit einem zwischen zwei Elektroden in Sandwichform angebrachten Körper oder Körperteil aus pyroelektrischem Material enthält, dass jedes dieser pyroelektrischen Elemente durch zwei Leiter der Verpackung derart im Abstand von der Basis des Kolbens gehalten wird, dass jedes der genannten pyroelektrischen Elemente elektrisch mit einem jeweiligen ersten tragenden Leiter verbunden und von einem jeweiligen zweiten tragenden Leiter isoliert ist.

6. Infrarot-Strahlungsdetektor nach Anspruch 5, in Abhängigkeit vom Anspruch 3, dadurch gekennzeichnet, dass die pyroelektrischen Elemente von den jeweiligen zweiten tragenden Leitern durch eine gemeinsame Isolierwendel zwischen den hochstehenden Hauptabschnitten der zweiten tragenden Leiter und einer Seitenfläche der Verpackung isoliert sind, wobei die pyroelektrischen Elemente an einem Teil der Wendel befestigt sind, die aus den Endabschnitten der genannten zweiten tragenden Leiter herausragen.

7. Infrarot-Strahlungsdetektor nach Anspruch 5 oder 6, dadurch gekennzeichnet, dass die Schaltungsanordnung einen Feldeffekttransistor enthält, dessen Gate an einen der ersten tragenden Leiter elektrisch angeschlossen ist, und weiter ein Diodenpaar enthält, das in entgegengesetztem Sinne zwischen dem Gate und dem anderen ersten tragenden Leiter angeschlossen ist.

8. Infrarot-Strahlungsdetektor nach Anspruch 7, dadurch gekennzeichnet, dass der Kolben Stromleiter enthält, die sich durch die Basis zur Bildung von zumindest zwei Kontaktstäben im Kolben erstrecken, und dass die Source und die Drain des Feldeffekttransistors jeweils an die zweiten tragenden Leiter der Verpackung elektrisch angeschlossen sind, wobei jeder der zweiten tragenden Leiter elektrisch mit einem betreffenden der genannten Stäbe elektrisch verbunden ist.

**Revendications**

1. Détecteur de rayonnement infrarouge pyroélectrique muni d'une enveloppe comportant une base, d'un élément pyroélectrique comprenant un corps en matériau pyroélectrique compris entre deux électrodes, élément pyroélectrique qui est présent à l'intérieur de l'enveloppe et qui est maintenu en relation espacée par rapport à la base par deux organes de support, et d'un arrangement de circuit présentant au moins un élément de circuit connecté à l'une desdites électrodes, l'arrangement de circuit étant encapsulé dans un emballage, qui est fixé à la base à l'intérieur de l'enveloppe et qui présente des conducteurs en saillie connectés à l'arrangement de circuit, l'un des organes de support comprenant l'un desdits conducteurs et l'autre organe comportant un autre conducteur dudit emballage.

2. Détecteur de rayonnement infrarouge selon la revendication 1, caractérisé en ce que l'emballage présente une face pratiquement plane, qui est fixée à la base de l'enveloppe de façon que les conducteurs en saillie s'étendent à partir de ladite base.

3. Détecteur de rayonnement infrarouge selon l'une des revendications précédentes, caractérisé en ce que les conducteurs de support présentent chacun une partie principale, qui est verticale par rapport à la base de l'enveloppe, et une partie terminale est opposée audit emballage, partie terminale qui est transversale à ladite partie principale.

4. Détecteur de rayonnement infrarouge selon l'une des revendications précédentes, caractérisé en ce que l'élément pyroélectrique est connecté électriquement à un premier conducteur de support et isolé électriquement par rapport à un deuxième conducteur de support.

5. Détecteur de rayonnement infrarouge selon l'une des revendications précédentes, caractérisé en ce que le conducteur comporte deux éléments pyroélectriques présentant un corps ou partie de corps en matériau pyroélectrique compris entre deux électrodes, chacun des éléments pyroélectriques étant maintenu en relation espacée par rapport à la base de l'enveloppe par deux conducteurs de l'emballage de façon que chacun desdits éléments pyroélectriques soit connecté électriquement à un premier conducteur de support respectif et isolé électriquement par rapport à un deuxième conducteur de support respectif.

6. Détecteur de rayonnement infrarouge selon la revendication 5, tout en dépendant de la revendication 3, caractérisé en ce que les éléments pyroélectriques sont isolés des deuxièmes conducteurs de support respectifs par un fil isolant commun prévu entre les parties principales verticales des deuxièmes conducteurs de support et une face latérale de l'emballage, les éléments pyroélectriques étant fixés à une partie du fil dépassant les parties terminales desdits seconds conducteurs de support.

7. Détecteur de rayonnement infrarouge selon la revendication 5 ou la revendication 6, caractérisé en ce que l'arrangement de circuit comporte un transistor à effet de champ, dont la porte est connectée électriquement à l'un des premiers conducteurs de support et comporte en outre une paire de diodes connectée en sens opposés entre la porte et l'autre premier conducteur de support.

8. Détecteur de rayonnement infrarouge selon la revendication 6, caractérisé en ce que l'enveloppe présente des conducteurs qui s'étendent à travers la base pour former au moins deux bornes de contact à l'intérieur de l'enveloppe, et que la source et le drain du transistor à effet de champ sont connectés électriquement respectivement aux deuxièmes conducteurs de support de l'emballage, chacun desdits seconds éléments de support étant connectés électriquement à une borne respective desdites bornes.

# Fig. 1.

## Fig. 2.

## Fig. 3.

## Fig. 4.

## Fig. 5.